# EUROPÄISCHE PATENTSCHRIFT

(11) **EP 1 089 031 B1**
(45) Veröffentlichungstag und Bekanntmachung des Hinweises auf die Patenterteilung: **05.07.2006**
(21) Anmeldenummer: 00810781.5
(22) Anmeldetag: 31.08.2000
(51) Int. Cl.: F17C 13/00, H01F 6/06, H01H 1/00

(54) **Tieftemperaturvorrichtung**
Cryogenic cooling device
Dispositif cryogénique

(30) Priorität: 01.10.1999 DE 19947410
(43) Veröffentlichungstag der Anmeldung: 04.04.2001
(73) Patentinhaber: ABB RESEARCH LTD., 8050 Zürich (CH)
(72) Erfinder: Paul, Willi, Dr., 5430 Wettingen (CH)
(74) Vertreter: ABB Patent Attorneys

(56) Entgegenhaltungen:
- EP-A- 0 789 368
- US-A- 3 644 803
- US-A- 3 839 689
- US-A- 4 314 123

## Beschreibung

### TECHNISCHES GEBIET

Die vorliegende Erfindung bezieht sich auf den technischen Einsatz von elektrischen Bauteilen mit einer unterhalb Raumtemperatur liegenden Betriebstemperatur. Sie betrifft eine Tieftemperaturvorrichtung gemäss dem Oberbegriff des Patentanspruchs 1.

### STAND DER TECHNIK

Elektrische Bauteile wie zum Beispiel Strombegrenzer, Kabel oder Transformatoren mit Komponenten aus supraleitenden Materialien sind wegen der reduzierten ohmschen Verluste für den Einsatz in Energieversorgungsnetzen geeignet. Besagte Komponenten müssen jedoch auf eine Betriebstemperatur gekühlt werden, welche deutlich unterhalb der Umgebungs- oder Raumtemperatur liegt. Die supraleitenden Komponenten werden zu diesem Zweck in einem Kryostat genannten Kühlmittelbehälter angeordnet und durch Kühlmittel, im Falle von Hochtemperatursupraleitermaterialien vorzugsweise durch flüssigen Stickstoff, auf die vorgesehene Betriebstemperatur gekühlt.

Über normalleitende Zu- und/oder Wegleitungen, durch welche die zu kühlenden Tieftemperaturbauteile mit dem auf Raumtemperatur befindlichen Übertragungsnetz verbunden sind, wird Wärme in den Kryostaten geführt. Diese Leitungen sind so dimensioniert, dass im Dauerbetrieb der Wärmeeintrag in den Kryostaten zu etwa gleichen Teilen durch die vom Nennstrom in den Leitungen erzeugte Joul'sche Wärme und durch Wärmeleitung verursacht wird. Nachteilig ist dabei, dass auch bei unterbrochenem elektrischem Strom, d.h. bei Stillstand der Tieftemperaturvorrichtung, weiterhin Wärme durch die Leitungen in den Kryostaten geführt wird und eine entsprechende Kühlleistung erforderlich ist.

In Energieversorgungsnetzen eingesetzte Strombegrenzer auf Supraleiterbasis sind in der Lage, potentielle Kurzschlussströme auf einen Wert nahe dem im Dauerbetrieb getragenen Nennstrom zu begrenzen. In der EP 0 926 797 A2 ist eine Vorrichtung zur Überstrombegrenzung, umfassend eine Parallelschaltung einer Drosselspule mit einer Reihenschaltung aus einem Hochtemperatursupraleiter und einem im Normalbetrieb geschlossenen Schalter bekannt. Zu seinem eigenen Schutz wird der Supraleiter nur kurze Zeit nach einem Kurzschluss, beispielsweise während der ersten Halbwelle, durch den Überstrom belastet und möglichst bald durch Öffnen des Unterbrechers entlastet. Die weitere Begrenzung des Kurzschlussstromes wird durch die parallelgeschaltete Drosselspule übernommen. Der Schalter wird erst wieder geschlossen, wenn der Kurzschluss behoben und der Hochtemperatursupraleiter wieder auf Betriebstemperatur abgekühlt ist.

In der EP-A 0 789 368 erfolgt die Kühlung einer supraleitenden Einrichtung über eine indirekt kühlende Kältemaschine. Ein Trennschalter in einem Vakuumgehäuse, d.h. im Bereich einer Durchführung durch die Gehäusewand eines unter Vakuum stehenden Kryostaten, befindet sich auf Raumtemperatur, so dass Ohmsche Verluste im Schalter die Kältemaschine nicht belasten.

Ferner ist es bekannt, dass konventionelle Vakuumschalter für den Mittelspannungsbereich günstig hergestellt werden können. Sie werden normalerweise im Nulldurchgang eines zu unterbrechenden Stromes geöffnet. Ihr Nachteil ist, asymmetrische Ströme mit fehlenden Nulldurchgängen nicht sicher abschalten zu können. In der US 3,812,314 ist ein Vakuumschalter für UntergrundTransformatoren beschrieben, welcher aus Kosten- und Platzgründen in eine Kunststoffdurchführung eingebaut ist. Die Keramik des Schaltergehäuses ist dabei vollständig von der Kunststoffisolation der Durchführung umgeben. Ein Flansch in der Durchführung erlaubt es, diese hermetisch mit einer Wand eines Transformatorbehälters zu verbinden.

### DARSTELLUNG DER ERFINDUNG

Aufgabe ist es, die Wärmezufuhr in einen Kryostaten über eine zu einem Tieftemperaturbauteil führende Stromleitung zu reduzieren. Diese Aufgabe wird gelöst durch eine Tieftemperaturvorrichtung mit den Merkmalen des Patentanspruchs 1.

Kern der Erfindung ist es, zur Unterbrechung der Stromleitung einen Vakuumschalter vorzusehen und diesen in eine in den Innenraum eines Kryostaten führende Durchführung der Stromleitung zu integrieren. Somit ergänzt das Vakuum des Schalters die im Bereich der Durchführung unterbrochene thermische Isolation des Kryostaten. Insbesondere im abgeschalteten Zustand, d.h. bei geöffnetem Schalter, wird der Wärmeeintrag in den Kryostaten somit wesentlich verringert.

Gemäss einer ersten Ausführungsform sind die Vakuumflasche des Schalters und die Durchführungsisolation je aus einem schlecht wärmeleitenden elektrischen Isolator gefertigt, bevorzugterweise sind sie sogar identisch.

Gemäss einer zweiten Ausführungsform führen die Stromzu- und/oder -wegleitungen zu einem im Kryostaten befindlichen Bauteil auf Hochtemperatursupraleiterbasis. Die Kühlmittel umfassen in diesen Falle vorzugsweise flüssigen Stickstoff.

In einer weiteren Ausführungsform ist das Tieftemperaturbauteil ein supraleitender Strombegrenzer. Dieser Ausführungsform liegt die Erkenntnis zugrunde, dass unter Verwendung eines Strombegenzers auf Supraleiterbasis ein Kurzschlussstrom symmetrisch begrenzt wird, d.h. dass keine nennenswerten Gleichstrom-Offsetkomponenten auftreten. Aus diesem Grund reicht ein Schalter zur Unterbrechung der zu schützenden Stromleitung aus, welcher nur im Stromnulldurchgang sicher schaltet. Die Kombination von supraleitendem Strombegrenzer und Vakuumschalter weist also ebenfalls explizit erfinderischen Charakter auf.

Weitere vorteilhafte Ausführungsformen gehen aus den abhängigen Patentansprüchen hervor.

### KURZE BESCHREIBUNG DER FIGUREN

Nachfolgend wird die Erfindung anhand von Ausführungsbeispielen im Zusammenhang mit den Zeichnungen näher erläutert. Es zeigen
Fig.1 eine Tieftemperaturvorrichtung nach der Erfindung und
Fig.2 eine Stromdurchführung mit integriertem Vakuumschalter.

Die in den Zeichnungen verwendeten Bezugszeichen sind in der Bezugszeichenliste zusammengefasst. Grundsätzlich sind gleiche Teile mit denselben Bezugszeichen versehen.

### WEGE ZUR AUSFÜHRUNG DER ERFINDUNG

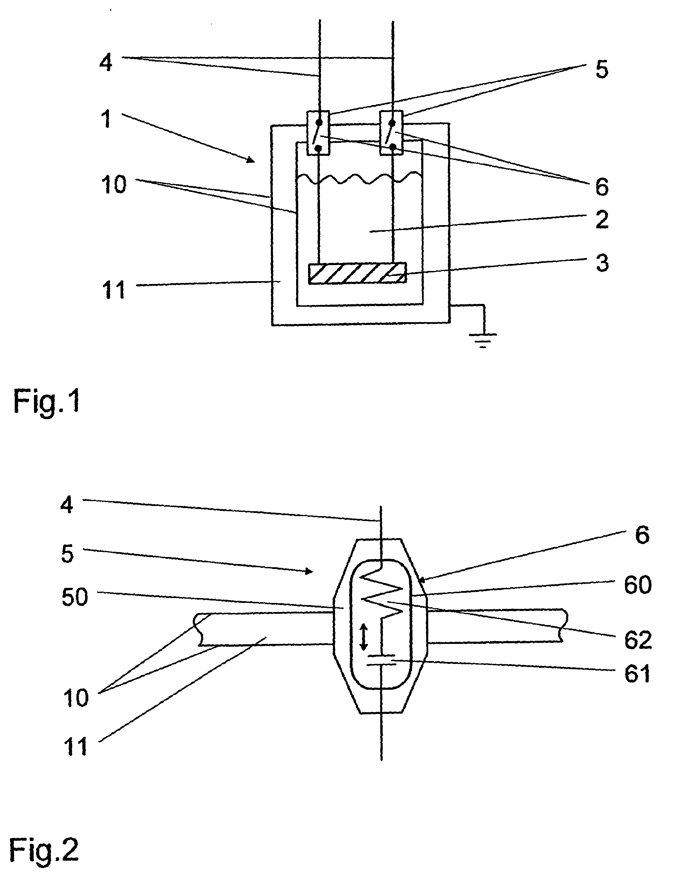

In der Fig.1 ist eine Tieftemperaturvorrichtung zusammen mit einem Kryostaten 1 und einer darin enthaltenen Kühlflüssigkeit 2 dargestellt. Der Kryostat 1 ist vorzugsweise doppelwandig aufgebaut, wobei zwischen den Kryostatwänden 10 ein Vakuum 11 die thermische Isolation des gekühlten Innenraumes des Kryostaten 1 gewährleistet. Ein Tieftemperaturbauteil 3, welches durch die Kühlflüssigkeit 2 auf seine Betriebstemperatur gekühlt wird, ist über mindestens zwei Zu- oder Wegleitungen 4 an ein nicht dargestelltes Stromversorgungsnetz angeschlossen. Die Zu- oder Wegleitungen 4 werden mittels sogenannter Durchführungen 5 in den Kryostaten 1 ein- beziehungsweise aus dem Kryostaten hinausgeführt. In den in Bohrungen durch die Kryostatwände 10 angeordneten Durchführungen 5 ist erfindungsgemäss jeweils ein Vakuumschalter 6 integriert.

In der Fig.2 ist eine Kombination von Durchführung 5 und Vakuumschalter 6 dargestellt. Eine Vakuumflasche 60 bildet die eigentliche Schaltkammer, in welcher sich zwei auf einer Achse angeordnete Schaltstücke oder Kontakte 61 befinden. Mindestens einer der beiden Kontakte, vorzugsweise der dem Stromversorgungsnetz zugewandte, ist durch einen nicht dargestellten mechanischen Antrieb axial bewegbar. Zum Wegausgleich ist eine Faltenhülse oder ein Federelement 62 vorgesehen. Die Durchführung 5 umfasst einen elektrisch isolierenden Körper 50, welcher direkt oder über einen Flansch mit den Kryostatwänden 10 verbunden ist.

Im Bereich der Durchführungen 5 ist das Vakuum 11 des Kryostaten 1 beziehungsweise die thermische Isolation unterbrochen. Üblicherweise sind Durchführungen so ausgebildet, dass zwischen dem auf hohem elektrischem Potential stehenden Leiter 4 und dem normalerweise geerdeten Kryostaten 1 beziehungsweise dessen Wänden 10 keine hohen elektrischen Felder aufgebaut werden. Ein grosser Abstand zwischen Leiter 4 und Kryostatwand 10 mit einer entsprechenden Ausdehnung der elektrischen Durchführungsisolation 50 senkrecht zum Leiter 4 (d.h. in der Ebene der Kryostatwand 10) hat jedoch eine beträchtliche Wärmeleitfähigkeit durch ebendiese Isolation 50 selbst zur Folge.

Demgegenüber wird bei der in Fig.2 gezeigten Durchführung 5 ein Teil der elektrischen Isolation zwischen Leiter 4 und Kryostat 1 durch das Vakuum des Schalters 6 übernommen. Dadurch kann die besagte Ausdehnung des isolierenden Körpers 50 senkrecht zum Leiter 4 reduziert werden. In der Folge verringert sich die Wärmeleitfähigkeit in der Isolation 50 parallel zum Leiter 4 und somit der Wärmeeintrag in den Kryostaten 1. Weiter ist bei geöffnetem Vakuumschalter 6 nicht nur der elektrische Strom, sondern auch die Wärmeleitung durch den Leiter 4 selbst unterbrochen. Nur der dem Bauteil 3 zugewandte der beiden Schaltkontakte 61 bleibt mit dem Kühlmittel verbunden, der äussere erwärmt sich nach dem Öffnen des Schalters auf Raumtemperatur.

Zur weiteren Verringerung des Wärmeeintrags in den Kryostaten 1 wird bei der Auswahl der Materialien für die Durchführungsisolation 50 und die Vakuumflasche 60 ebenfalls auf eine gute thermische Isolation geachtet. Geeignet sind beispielsweise Glas oder Porzellan, welche einen geringen Wärmeleitungskoeffizienten von 0.8 W/Km respektive 2.5 W/Km bei Raumtemperatur aufweisen. Ist die elektrische Isolation der Vakuumflasche 60 alleine bereits ausreichend, kann die Isolation 50 hinsichtlich ihrer thermischen Eigenschaften weiter optimiert werden und aus einem Schaummaterial gefertigt sein. Weiter sind auch die thermischen Ausdehnungskoeffizienten der verwendeten Materialien nicht zu vernachlässigen, denn der Temperaturunterschied zwischen den zwei Stirnseiten der Durchführung ist beträchtlich. Durchführungsisolation 50 und Vakuumflasche 60 können aus diesem Grunde auch kombiniert, d.h. aus einem Stück eines vorzugsweise keramischen Isolators gefertigt sein.

Das Tieftemperaturbauteil 3 muss durch Kühlmittel auf seine Betriebstemperatur gekühlt werden, welche bei Bauteilen auf Supraleiterbasis beispielsweise unterhalb der kritischen Temperatur des eingesetzten Supraleitermaterials liegt. Dazu kann das Bauteil direkt auf ein Kühlelement plaziert werden, welches wiederum mit einer ausserhalb der Kryostaten angeordneten Kältemaschine verbunden ist. Das Kältereservoir kann aber auch als Kühlflüssigkeit 2 im Kryostaten 1 enthalten sein, wobei das Tieftemperaturbauteil 3 der Einfachheit halber in die Kühlflüssigkeit 2 eingetaucht ist. Falls der Kryostat 1 luftdicht abgeschlossen ist, kann durch kontrollierte Druckänderungen der Siedepunkt der Kühlflüssigkeit 2 und somit die Betriebstemperatur des Tieftemperaturbauteils 3 beeinflusst werden.

Die Tatsache, dass ein erfindungsgemäss eingebauter Vakuumschalter 6 in thermischem Kontakt mit dem gekühlten Innenraum des Kryostaten 1 steht, trägt durch den Kryopumpen-Effekt zu einer zusätzlichen Verbesserung des Schaltervakuums bei. Aus diesem Grund sind gasisolierte Schalter eindeutig weniger geeignet, da die verbesserte elektrische Isolation entweder auf Kosten einer erhöhten Wärmeleitfähigkeit geht oder das Isoliergas möglicherweise auf dem Boden der Schaltkammer kondensiert.

Ein weiterer Vorteil ist darin zu sehen, dass der erfindungsgemäss eingebaute Schalter 6 in geschlossenem Zustand mit einem höheren Nennstrom belastet werden kann als derselbe Schalter ausserhalb des Kryostaten. Dies deshalb, weil die Kontakte 61 sich weniger stark erwärmen beziehungsweise von der Kühlung durch die Kühlmittel mitprofitieren.

Handelt es sich bei dem Tieftemperaturbauteil 3 um einen supraleitenden Strombegrenzer, so zeichnet sich eine Serieschaltung mit einem Vakuumschalter 6 noch durch weitere Vorteile aus. Ein beispielsweise durch eine reine Induktivität begrenzter Überstrom weist möglicherweise eine bedeutende Gleichstromkomponente auf, welche ein sicheres Abschalten eines Vakuumschalters nicht mehr gewährleistet. Demgegenüber hat ein durch einen supraleitenden Strombegrenzer symmetrisch begrenzter Überstrom, wie im Dauerbetrieb der Nennstrom, periodische Nulldurchgänge. Dadurch ist auch nach einem Kurzschluss und anschliessender Strombegrenzung ein problemloses Unterbrechen der Stromleitung 4 durch Öffnen des Vakuumschalters 6 möglich. Die Verwendung von supraleitenden Tieftemperaturbauteilen ermöglicht also den Einsatz von konventionellen Vakuumschaltern auch für Strombegrenzeranwendungen.

### BEZUGSZEICHENLISTE

- 1: Kryostat
- 10: Wand des Kryostaten
- 11: Thermisch isolierendes Vakuum
- 2: Kühlflüssigkeit
- 3: Tieftemperaturbauteil
- 4: Stromleitung
- 5: Durchführung
- 50: Isolation
- 6: Schalter
- 60: Vakuumflasche
- 61: Kontakte
- 62: Federelement

## Patentansprüche

1. Tieftemperaturvorrichtung mit einem Kryostaten und
a) einem abschaltbaren elektrischen Tieftemperaturbauteil (3),
b) mindestens einer Stromleitung (4) zur Verbindung des Tieftemperaturbauteils (3) mit einem Stromversorgungsnetz,
c) einer Durchführung (5) zur Ein- beziehungsweise Ausführung der mindestens einen Stromleitung (4) in den Kryostaten (1),
d) einem in der Stromleitung (4) in Serie zum Tieftemperaturbauteil (3) angeordneten Schalter (6),
e) der ein Vakuumschalter ist und in der Durchführung (5) angeordnet ist, **dadurch gekennzeichnet, dass**, der Kryostat, zur Kühlung des Tieftemperaturbauteils (3), eine Kühlflüssigkeit (2) enthält.

2. Vorrichtung nach Anspruch 1, **dadurch gekennzeichnet, dass** die Durchführung (5) einen elektrisch isolierenden Körper (50) aufweist, und dass dieser aus einem thermisch isolierenden Material gefertigt ist.

3. Vorrichtung nach Anspruch 2, **dadurch gekennzeichnet, dass** der elektrisch isolierende Körper (50) der Durchführung aus Keramik, Porzellan oder Glas gefertigt ist.

4. Vorrichtung nach Anspruch 2, **dadurch gekennzeichnet, dass** der Vakuumschalter (6) eine Vakuumflasche (60) aufweist und dass die Vakuumflasche (60) mit dem elektrisch isolierenden Körper (50) der Durchführung identisch ist.

5. Vorrichtung nach Anspruch 1, **dadurch gekennzeichnet, dass** der Kryostat (1) doppelwandig aufgebaut ist und ein thermisch isolierendes Vakuum (11) aufweist.

6. Vorrichtung nach Anspruch 1, **dadurch gekennzeichnet, dass** das Tieftemperaturbauteil (3) zumindest teilweise aus hochtemperatursupraleitenden Materialien gefertigt ist.

7. Vorrichtung nach Anspruch 6, **dadurch gekennzeichnet, dass** die Kühlflüssigkeit (2) flüssiger Stickstoff ist.

8. Vorrichtung nach Anspruch 6, **dadurch gekennzeichnet, dass** das Tieftemperaturbauteil (3) ein supraleitender Transformator ist

9. Vorrichtung nach Anspruch 6, **dadurch gekennzeichnet, dass** das Tieftemperaturbauteil (3) ein supraleitender Strombegrenzer ist.

## Claims

1. Low-temperature apparatus having a cryostat and
a) an electrical low-temperature component (3) which can be switched off,
b) at least one electrical cable (4) for connecting the low-temperature component (3) to an electricity supply network,
c) a bushing (5) for carrying the at least one electricity cable (4) into and out of the cryostat (1),
d) a switch (6) which is arranged in series with the low-temperature component (3) in the electrical cable (4),
e) which switch is a vacuum switch and is arranged in the bushing (5) **characterized in that** the cryostat for cooling the low temperature component (3) contains a cooling liquid (2).

2. Apparatus according to Claim 1, **characterized in that** the bushing (5) has an electrically insulating body (50), and **in that** this body is manufactured from a thermally insulating material.

3. Apparatus according to Claim 2, **characterized in that** the electrically insulating body (50) of the bushing is manufactured from ceramic, porcelain or glass.

4. Apparatus according to Claim 2, **characterized in that** the vacuum switch (6) has a vacuum flask (60), and **in that** the vacuum flask (60) is identical to the electrically insulating body (50) of the bushing.

5. Apparatus according to Claim 1, **characterized in that** the cryostat (1) has two walls and has a thermally insulating vacuum (11).

6. Apparatus according to Claim 1, **characterized in that** the low-temperature component (3) is at least partially manufactured from high-temperature superconducting materials.

7. Apparatus according to Claim 6, **characterized in that** the cooling liquid is liquid nitrogen.

8. Apparatus according to Claim 6, **characterized in that** the low-temperature component (3) is a superconducting transformer.

9. Apparatus according to Claim 6, **characterized in that** the low-temperature component (3) is a superconducting current limiter.

## Revendications

1. Dispositif cryogénique comprenant un cryostat et
a) un composant cryogénique (3) électrique pouvant être mis hors circuit,
b) au moins une ligne électrique (4) pour relier le composant cryogénique (3) avec un réseau d'alimentation électrique,
c) une traversée (5) pour l'entrée ou la sortie de l'au moins une ligne électrique (4) dans le cryostat (1),
d) un commutateur (6) disposé dans la ligne électrique (4) en série avec le composant cryogénique (3),
e) lequel est un commutateur à vide et est disposé dans la traversée (5), **caractérisé en ce que** le cryostat contient un liquide de refroidissement (2) pour refroidir le composant cryogénique (3).

2. Dispositif selon la revendication 1, **caractérisé en ce que** la traversée (5) présente un corps électriquement isolant (50) et que celui-ci est fabriqué dans un matériau d'isolation thermique.

3. Dispositif selon la revendication 2, **caractérisé en ce que** le corps électriquement isolant (50) de la traversée est fabriqué en céramique, en porcelaine ou en verre.

4. Dispositif selon la revendication 2, **caractérisé en ce que** le commutateur à vide (5) présente une bouteille sous vide (60) et que la bouteille sous vide (60) est identique au corps électriquement isolant (50) de la traversée.

5. Dispositif selon la revendication 1, **caractérisé en ce que** le cryostat (1) est constitué à double paroi et présente un vide (11) d'isolation thermique.

6. Dispositif selon la revendication 1, **caractérisé en ce que** le composant cryogénique (3) est au moins partiellement fabriqué dans des matériaux supraconducteurs à haute température.

7. Dispositif selon la revendication 6, **caractérisé en ce que** le liquide de refroidissement (2) est de l'azote liquide.

8. Dispositif selon la revendication 6, **caractérisé en ce que** le composant cryogénique (3) est un transformateur supraconducteur.

9. Dispositif selon la revendication 6, **caractérisé en ce que** le composant cryogénique (3) est un limiteur de courant supraconducteur.
